# EUROPEAN PATENT APPLICATION

(11) **EP 0 585 696 A2**
(43) Date of publication of application: **09.03.1994**
(21) Application number: 93113011.6
(22) Date of filing: 13.08.1993
(51) Int. Cl.: G07F 19/00, G07D 1/04

(54) **Automatic exchanging apparatus**

(30) Priority: 19.08.1992 JP 219999/92; 19.08.1992 JP 220000/92
(71) Applicant: HITACHI, LTD., Chiyoda-ku, Tokyo 100 (JP); THE TOKAI BANK, Ltd., Nagoya (JP)
(72) Inventor: Kosaka, Tatsuya, 111, Haruokacho Higashi, Owariasahi-shi (JP); Oda, Ikuyo, 111 Haruokacho Higashi, Owariasahi-shi (JP); Tanaka, Emiko, 111, Haruokacho Higashi, Owariasahi-shi (JP); Okamoto, Ryuichi, Seto-shi (JP); Kato, Hisaya, 111 Haruokacho Higashi, Owariasahi-shi (JP); Fukaya, Sadao, Seto-shi (JP); Goto, Kanzen, Aichi-gun, Aichi-ken (JP); Kurokawa, Toshihiro, Ichinomiya-shi (JP); Kitayama, Masakazu, Ichikawa-shi (JP)
(74) Representative: Altenburg, Udo, Dipl.-Phys.

(57) **Abstract**

There is disclosed an automatic exchanging apparatus which can be operated by any currency in yen and dollar when yen is exchanged into dollar. When an amount of currency to be dispensed is inputted in dollar or currency to be dispensed, a combination of kinds of currency and the respective numbers of the kinds corresponding to the amount of currency to be dispensed is read out from a table of an amount of currency and a combination of kinds of currency and the respective numbers of the kinds previously stored and is displayed in a display (7). The combination is previously determined by forecasting user's objects and use. When the combination is not desirable for the user, the user can change the combination. On the other hand, when an amount to be dispensed is inputted in yen or currency to be exchanged, the amount is converted into dollar on the basis of a conversion rate and then the above process is performed.

## Description

### BACKGROUND OF THE INVENTION

The present invention relates to an automatic exchanging apparatus, and more particularly to such an apparatus for exchanging first currency such as, for example, Japanese yen into second currency such as, for example, U.S. dollar in cash and/or in traveler's check.

In a conventional exchanging apparatus, in order to exchange currency, a user must designate kinds of currency to be dispensed and the respective numbers of the kinds. Such an exchanging apparatus is disclosed in JPA-63-307519.

An automatic cash transaction apparatus which calculates kinds of currency to be dispensed and the respective numbers of the kinds so that the total number of currency to be dispensed is minimized when an amount of currency to be dispensed is inputted and displays the calculated result in a display unit is disclosed in JPA-4-123284. For example, when 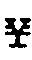 25,000 is inputted in this apparatus as an amount of currency to be dispensed, the apparatus displays two 10,000-yen bills and one 5,000-yen bill in the display unit. Thus, when the user confirms it and touches a confirmation key, the combined kinds of currency are dispensed. Furthermore, the apparatus includes a device for modifying the combined kinds of currency displayed in the display unit. For example, when a modification key for kind of currency is operated to reduce the number of 10,000-yen bill by one, two 5,000-yen bills are increased to display three 5,000-yen bills in total. Similarly, when the number of 5,000-yen bill is reduced by one, five 1,000-yen bills are displayed. In the apparatus, it takes time to dispense many kinds of currency.

### SUMMARY OF THE INVENTION

It is an object of the present invention to provide an automatic exchanging apparatus capable of dispensing currency satisfying kinds of currency and the respective numbers of the kinds desired by a user simply and rapidly.

In an embodiment of the present invention, a table of an amount of currency to be dispensed and a combination of predetermined kinds of currency and the respective numbers of the kinds corresponding to the amount of currency to be dispensed in the one-to-one correspondence manner is previously provided and when an amount of currency to be dispensed is inputted by the user, a combination of kinds of currency and the respective numbers of the kinds corresponding to the amount of currency is displayed in a display unit. At this time, the combination of the kinds of currency and the respective numbers of the kinds is set in accordance with the standard user's object and use. Further, a plurality of kinds of tables are provided in accordance with the user's object and use so that the combinations of the kinds of currency and the respective numbers of the kinds are set to meet the user's object and use. It is considered that the combination of the kinds of currency and the respective numbers of the kinds to be required in a travel for business is different from that in a sight-seeing tour, for example. These tables can be desirably corrected.

It is another object of the present invention to provide an automatic exchanging apparatus capable of being operated by user's desired currency to be either exchanged or dispensed to exchange currency. That is, the object is to provide an automatic exchanging apparatus which is easy to handle.

An amount of currency to be dispensed may be possibly determined in some user. Further, other user may have a limitation in an amount of currency capable of being exchanged. Accordingly, the possibility of operating the exchanging apparatus on the basis of an amount of currency to be either exchanged or dispensed improves how to use the exchanging apparatus.

### BRIEF DESCRIPTION OF THE DRAWING

Fig. 1 is a perspective view of an exchanging apparatus of an embodiment;
Fig. 2 is a block diagram schematically illustrating the exchanging apparatus of Fig. 1;
Figs. 3A to 3C illustrate pictures for inputting an amount of currency to be exchanged;
Fig. 4 is a flow chart showing a procedure of designating an amount of currency to be dispensed directly or indirectly by using currency to be exchanged;
Figs. 5A and 5B illustrate pictures which display an amount of currency to be dispensed and an amount of currency to be exchanged corresponding thereto as well as selection courses corresponding to objects and use of the currency to be dispensed;
Figs. 6A and 6B illustrate tables of an amount of currency to be dispensed and a combination of kinds of currency and the respective numbers of the kinds;
Fig. 7 illustrates a picture which displays a combination of kinds of currency and the respective numbers of the kinds read from the table of Fig.6A;
Fig. 8 illustrates an operation picture for modifying the combination of Fig. 7;
Fig. 9 is a flow chart showing a series of procedure for dispensing an amount of currency designated by the user in combination of kinds of currency and the respective numbers of the kinds required by the user;
Fig. 10 illustrates a display picture of another embodiment;
Fig. 11 is a flow chart showing a process of the embodiment shown in Fig. 10;
Figs. 12 to 14 illustrate guidance pictures for registering, modifying or deleting a table;
Fig. 15 illustrates a printed table of another embodiment;
Fig. 16 illustrates an example of a message format sent to the exchanging apparatus of the embodiment from a higher-rank station;
Fig. 17 is a flow chart showing a process for registering, modifying or deleting a table;
Figs. 18 and 19 are flow charts showing processes for examining data in a table.

### DETAILED DESCRIPTION OF THE PREFERRED EMBODIMENTS

The present invention is now described in detail with reference to embodiments. The present invention is not limited to the embodiments.

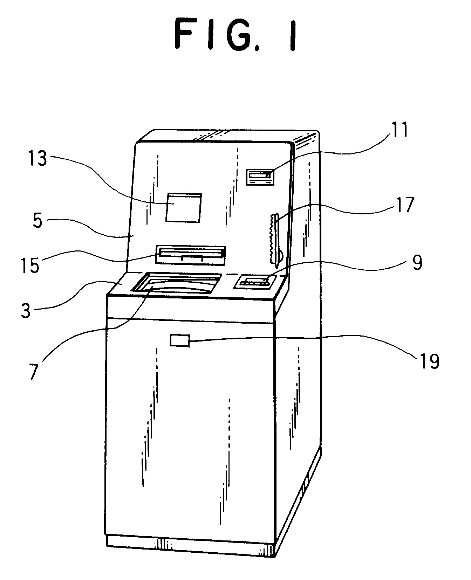

Fig. 1 is a perspective view of an automatic exchanging apparatus of an embodiment. Transaction panels 3 and 5 formed into substantially L-shaped structure are disposed in the front of a housing 1 of the exchanging apparatus. An input/display unit 7 of the touch panel system having the known structure and a signature paper rest 9 are disposed in a horizontal portion 3 of the panel. An input/output port 11 for a magnetic card and a detailed slip, a dispensing port 13 for coins, a dispensing port 15 for bills and traveller's checks, and a ball-point pen 17 for signature are disposed in a vertical portion 6 of the panel. Reference numeral 19 denotes a human body detection device having a known structure and utilizing infrared rays.

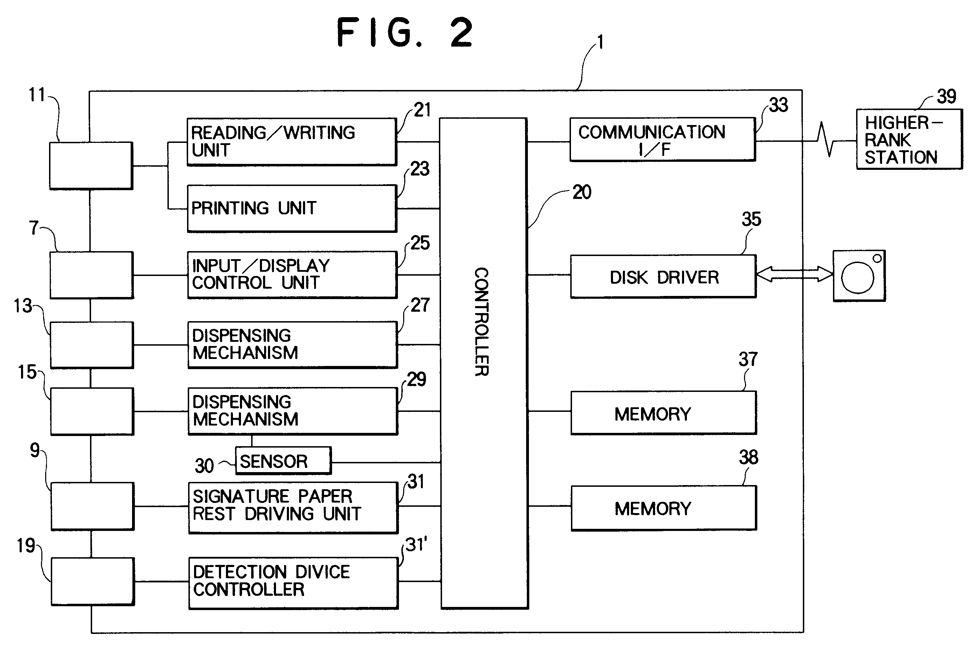

Fig. 2 is a block diagram schematically illustrating the exchanging apparatus of the embodiment. The same elements as those of Fig. 1 are designated by the same reference numerals. A controller 20 performs control of the whole apparatus and operation necessary for exchange and includes a CPU as a main constituent element thereof. A control program of the controller is stored in a memory (ROM) 37. Date relative to an exchange or conversion rate and an issue fee of traveller's check are stored in a writable memory (RAM) 38. The data are set by means of the input/display unit 7 by a banker when the apparatus is started. A table relative to an amount of currency to be dispensed and a combination of kinds of currency and the respective numbers of the kind to be described later is also stored in the RAM 38. Date of the table are set by the banker with the unit 7 or are read from an external memory medium, for example, a floppy disk through a disk driver 35. The data of the table is also inputted through an interface 33 on the basis of a command of a higher-rank station.

A reading/writing unit 21 reads out magnetic information on a user's card inserted from the input/output port 11 and updates the information after completion of exchange. A printing unit 23 prints particulars necessary for the detailed slip. The printed detailed slip is issued from the input/output port 11. In the embodiment, when a traveller's check is contained in the kinds of currency to be dispensed, an issue number of the traveller's check is read by an optical sensor 30 and is printed on the detailed slip. An input/display control unit 25 controls the input/display unit 7. A dispensing mechanism 27 for coins includes a holder of coins for predetermined kinds and a device for conveying coins of a number designated by the holder to the output port 13. A dispensing mechanism 29 for bills and traveller's checks also includes the similar holder and conveying device. The optical sensor 30 for reading the issue number of the traveller's check is disposed near the holder for the traveller's check. A signature paper driving unit 31 includes a device for holding signature paper not used, a device for successively sending out the signature paper onto the panel 3, and a device for holding the signed paper, all of the devices of this unit not shown. A detection device controller 31' controlls the human body sensor 19.

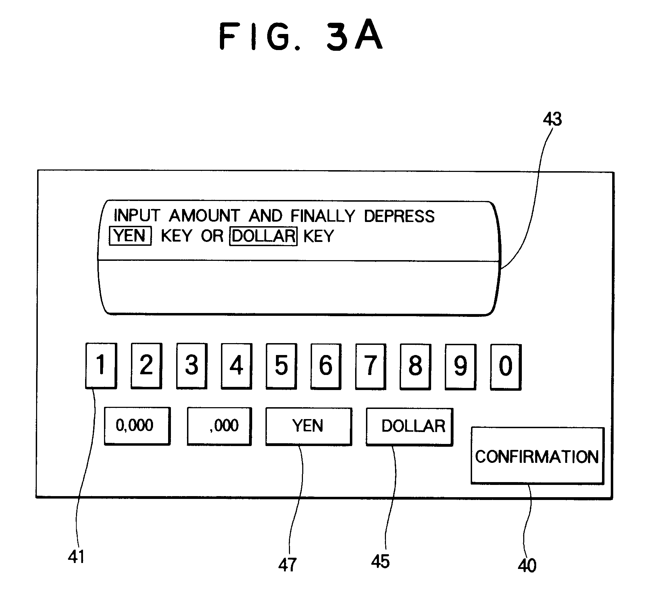

When the human body sensor 19 detects a user, a guidance picture appears in the input/display unit 7. The user inserts a card into the input/output port 11 in accordance with the guidance appearing in the input/display unit. A numerical key is then displayed in the input/display unit 7 and the user touches the numerical key displayed in the input/display unit to input the user's secret code. The information read from the card by the reading/writing unit 21 is sent to the higher-rank station 37 through the interface 33 and the resistered account number of the user, which includes a resistered secret code, is read therefrom. The resistered secret code is sent to the controller 20 and is compared with the secret code inputted by the user therein. When both of the secret codes are coincident, the controller 20 changes the picture of the input/display unit 7 to a new picture. The new picture (not shown) displays the numerical key and a guidance for causing the user to input a telephone number by means of the numerical key. When the telephone number is inputted by the user, a picture shown in Fig. 3A is displayed in the input/display unit 7 and the operation for exchange is started. In the exchanging apparatus of the embodiment, the identification of the user is made by the secret code and further the user's signature made on the signature paper the telephone number input is used as proofs for the identification of the user.

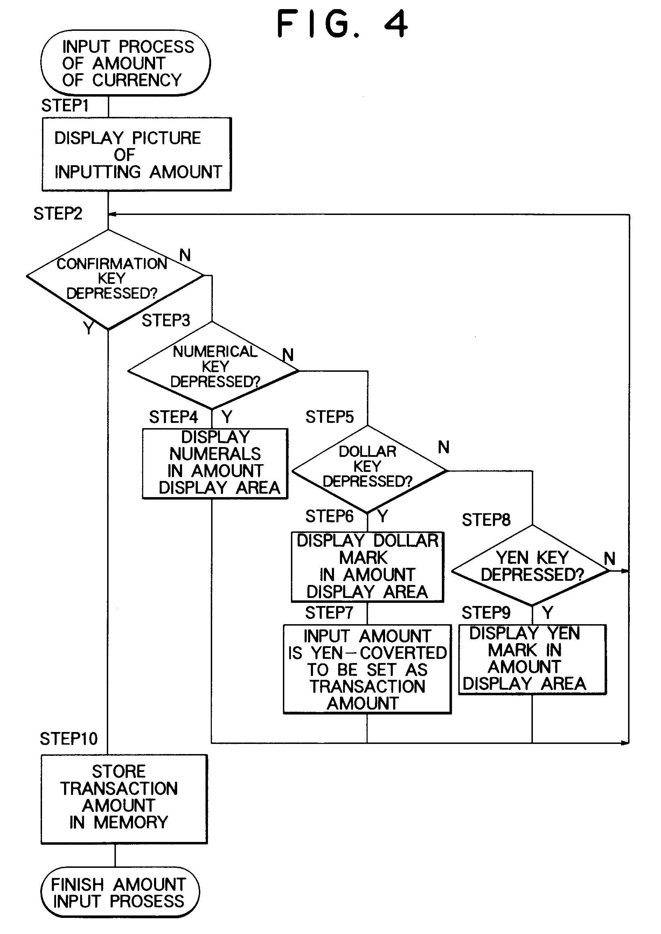

A flow chart of Fig. 4 shows an operation of the user for the display picture of Fig. 3A and a process of the devices corresponding to the operation.

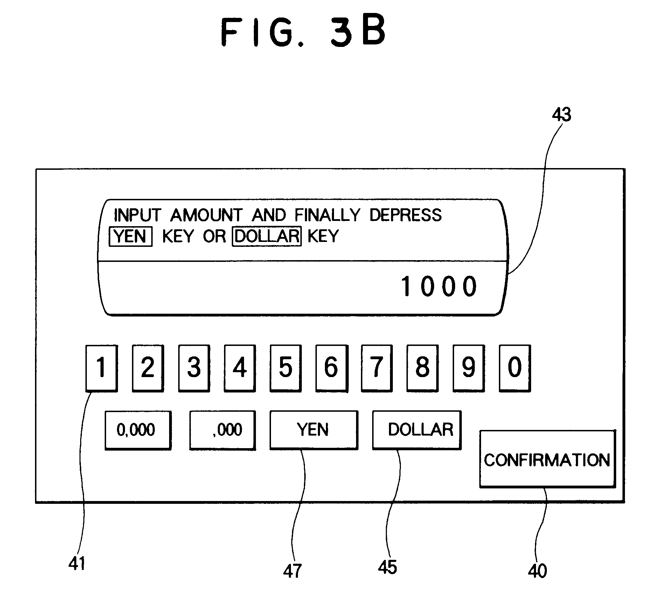

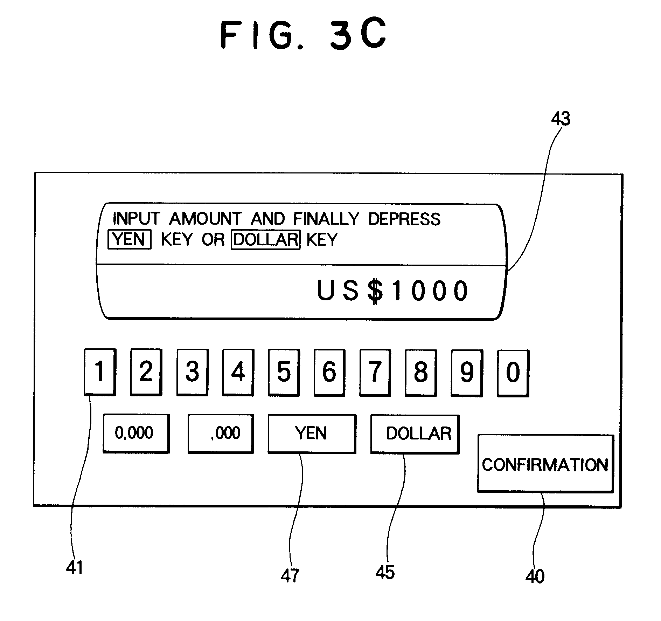

In step 1, a picture for input of an amount of currency (Fig. 3A) is displayed to urge the user to input a transaction amount. In step 2, whether a confirmation key 40 is depressed or not is judged. When the confirmation key 40 is depressed, the process proceeds to step 10, and when the confirmation key 40 is not depressed, the process proceeds to step 3. In step 3, whether a numerical key 41 is depressed or not is judged. When the numerical key 41 is depressed, the process proceeds to step 4, and when the numerical key 41 is not depressed, the process proceeds to step 5. In step 4, numerals are displayed in an amount display area 43 in accordance with the depressed numerical key 41 (see Fig. 3B) and the process is returned to step 2. In step 5, a dollar key 45 is depressed or not is judged. When the dollar key 45 is depressed, the process proceeds to step 6, and when the dollar key 45 is not depressed, the process proceeds to step 8. In step 6, a dollar mark is displayed in the amount display area 43 (see Fig. 3C) and the process proceeds to step 7. In step 7, the inputted amount of currency in dollars is converted into an amount of currency in yen at the conversion rate inputted by a clerk in charge when a power supply for the automatic transaction apparatus is turned on and the converted amount is set as a transaction amount. Then, the process is returned to step 2. In step 8, whether a yen key 47 is depressed or not is judged. When the yen key 47 is depressed, the process proceeds to step 9, and when the yen key 47 is not depressed, the process is returned to step 2. In step 9, a yen mark is displayed in the amount display area 43 and the process is returned to step 2. In step 10, the transaction amount in dollar and the converted transaction amount in yen are stored in the memory 38 and the amount input process is finished.

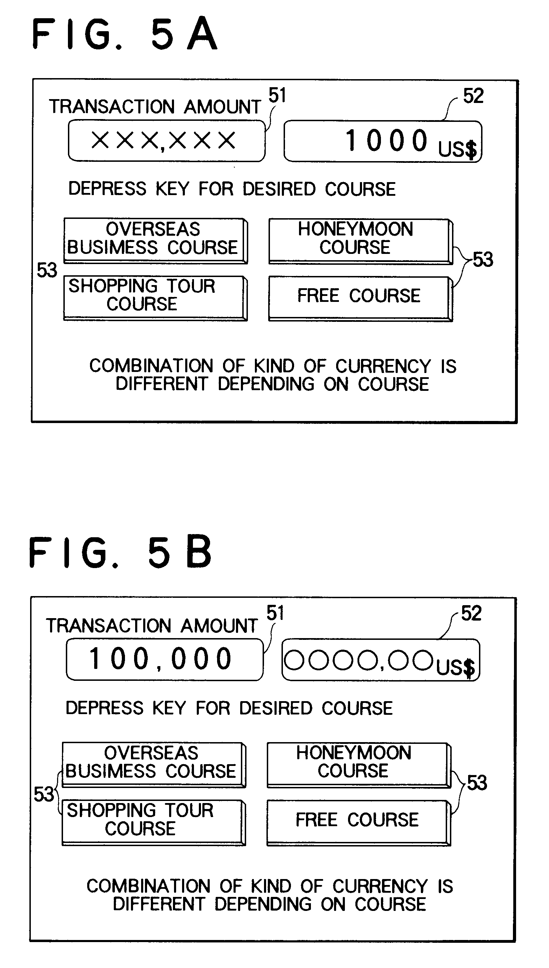

Then, after the confirmation key 40 of Fig. 3C has been touched, the picture shown in Fig. 5A is displayed in the input/display unit 7. In the picture of Fig. 5A, areas 51 and 52 for displaying an amount of currency (in "yen" in the embodiment) to be exchanged and a corresponding amount of currency (in "US dollar" in the embodiment) to be dispensed, respectively, and course selection keys 53 are displayed. Fig. 5A displays the picture obtained when the user depresses the dollar key 45 in the picture of the Fig. 3C. The amount of currency displayed in the yen display area 51 is a value calculated in step 7 of Fig. 4.

Fig. 5B displays a picture in the case where the yen key 47 is selected in the operation shown in Fig. 3B. In this case, the dollar display area 52 displays an amount of currency calculated in accordance with the conversion rate stored in the memory 38.

The selection keys 53 are to read a combination of kinds of currency and the respective numbers of the kinds in accordance with an object of a course displayed on each of the selection keys. A relation of an amount of currency to be dispensed and a combination of kinds of the currency and the respective numbers of the kinds are previously defined in a table format in accordance with the courses and is stored in the memory 38. Input and modification of the table are described later.

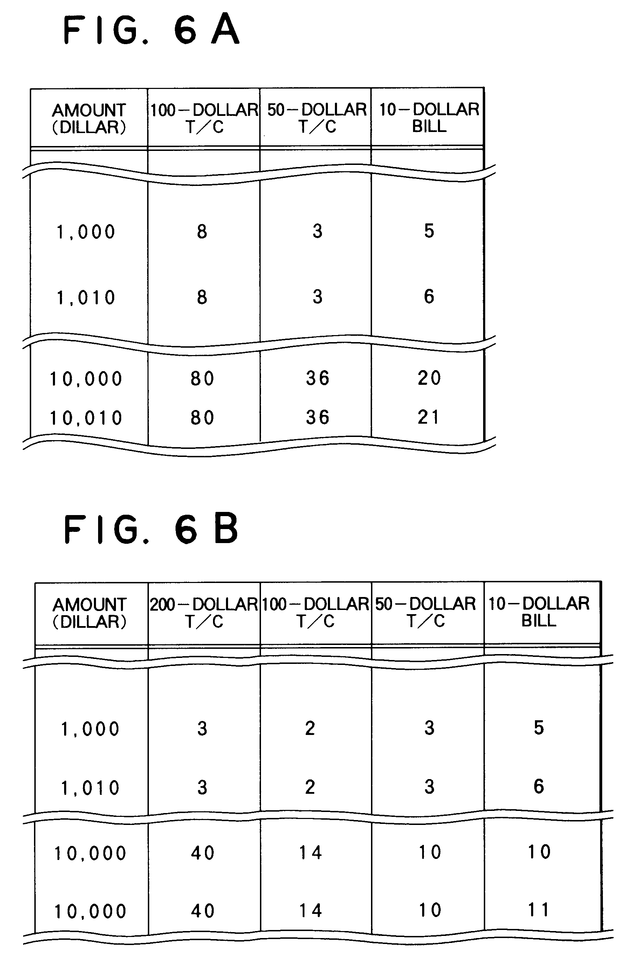

Fig. 6A shows an example of a table for a "free course". Fig. 6B shows an example of a table for an "overseas business". In the latter case, kinds of currency for a large amount of currency are combined.

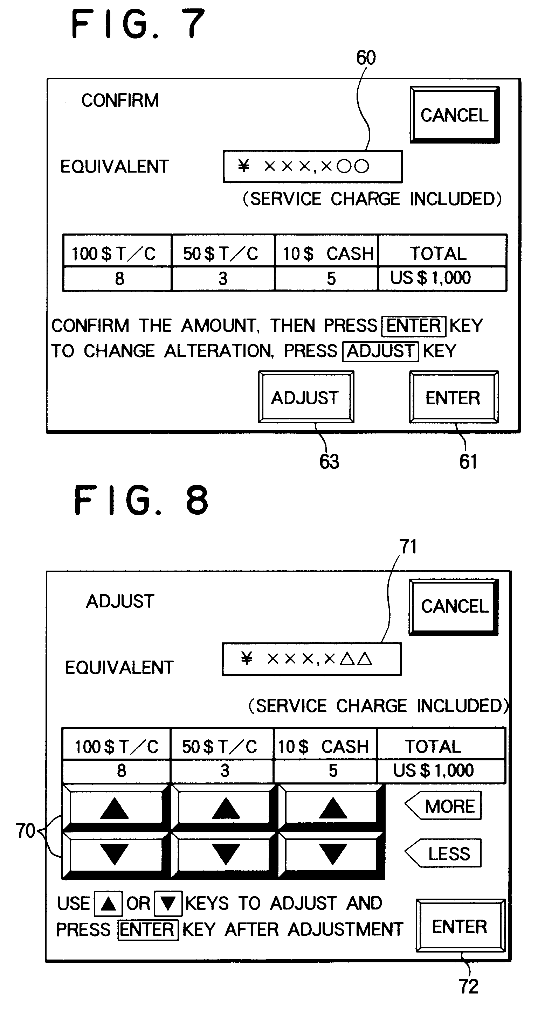

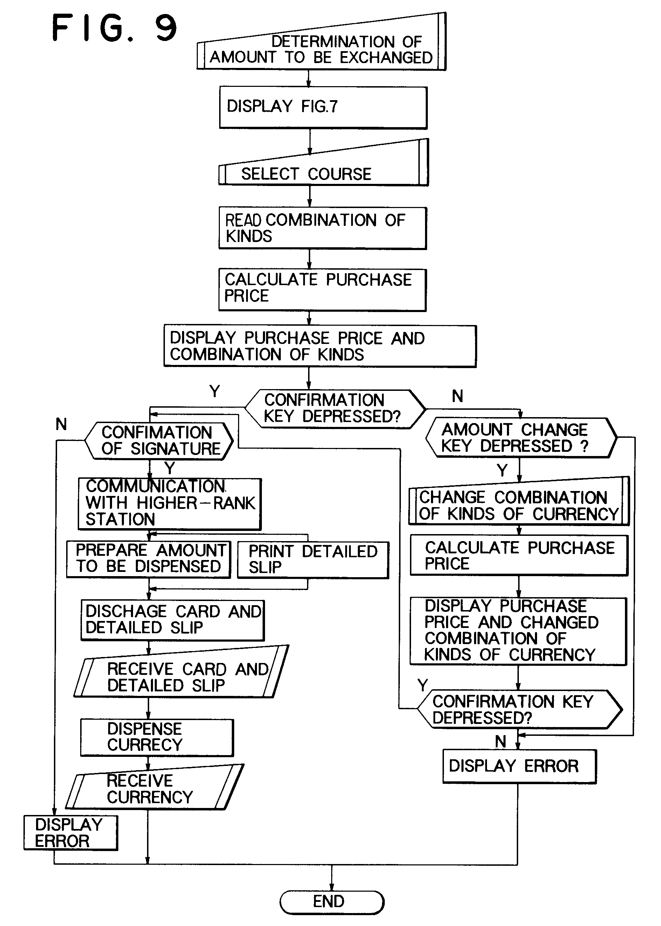

In Fig. 5A, when the "free course" is selected, a combination of kinds of currency and the respective numbers of the kinds for US$ 1,000 is selected and a picture shown in Fig. 7 is displayed in the input/display unit 7. When the table of Fig. 6B is selected, columns for the kinds of currency is increased in the picture of Fig.7.

In Fig. 5A, an amount of currency displayed in the yen area 51 of the transaction amount is calculated in accordance with only the conversion rate, while an amount of currency which further includes an issue fee of traveller's check is displayed in a purchase price area 60 of Fig. 7.

In Fig. 3B, When the input is made in yen, a combination of kinds of currency and the respective numbers of the kinds corresponding to an amount of currency (not exceeding a displayed amount) extremely approximating to the amount displayed in the dollar area 52 of Fig. 5B is read from the selected table and is displayed as in Fig. 7.

In another embodiment, the pictures of Figs. 5A and 5B are omitted and when the confirmation key is depressed in the picture of Fig. 3C, the picture of Fig. 7 is displayed. The table at this time uses the "free course".

In Fig. 7, when the user touches an enter key 61, the amount of currency corresponding to the kinds in the displayed combination is dispensed. When the signature of the user is required before dispensing, the guidance for requiring the signature on the paper of the signature paper rest 9 is displayed in the input/display unit 7 (not shown). Thus, after confirmation of the signature of the user, the amount of currency in the above combination is dispensed.

In Fig. 7, when the user touches an adjust key 63, a picture shown in Fig. 8 is displayed in the input/display unit 7. In the embodiment, a 10-dollar bill is reduced to 0 and 50-dollar traveller's checks are increased by one. The number of each of the kinds is increased or decreased by an up/down key 70. At this time, the total amount (1,000 dollars) is maintained without change. Such a process is well known and is disclosed in, for example, JPA-4-123284 and JPA-63-8815. The amount displayed in the equivalent (purchase price) area 60 is changed in accordance with a changed issue fee of the traveller's checks.

In another embodiment, increasing and decreasing the umber of each of the kinds can be performed without no limitation. When the 10-dollar bill is reduced by one, the total foreign currency can be changed and displayed to be 1,990 dollars. And when a 10-dollar bill is added, the total is displayed to be 1,010 dollars, accordingly.

In Fig. 3B, when the input is made in yen, an amount displayed in the purchase price area 71 is controlled not to exceed the amount of the inputted yen.

In Fig. 8, when the user touches the enter key 72, the amount of currency having the kinds in the displayed combination is dispensed.

The above series of operations are described in a flow chart shown in Fig. 9.

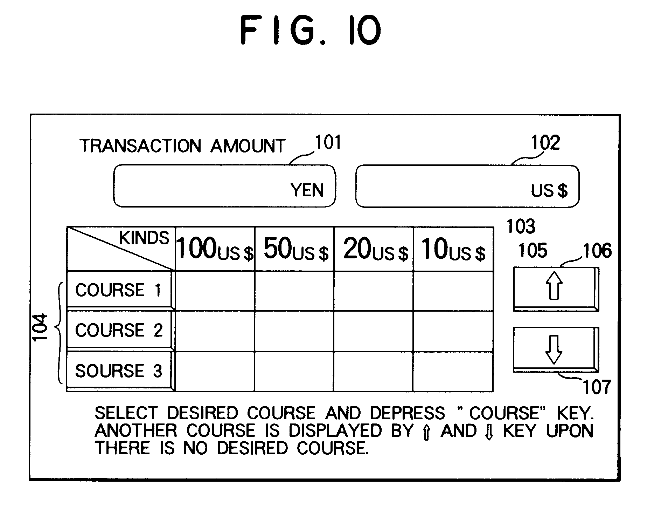

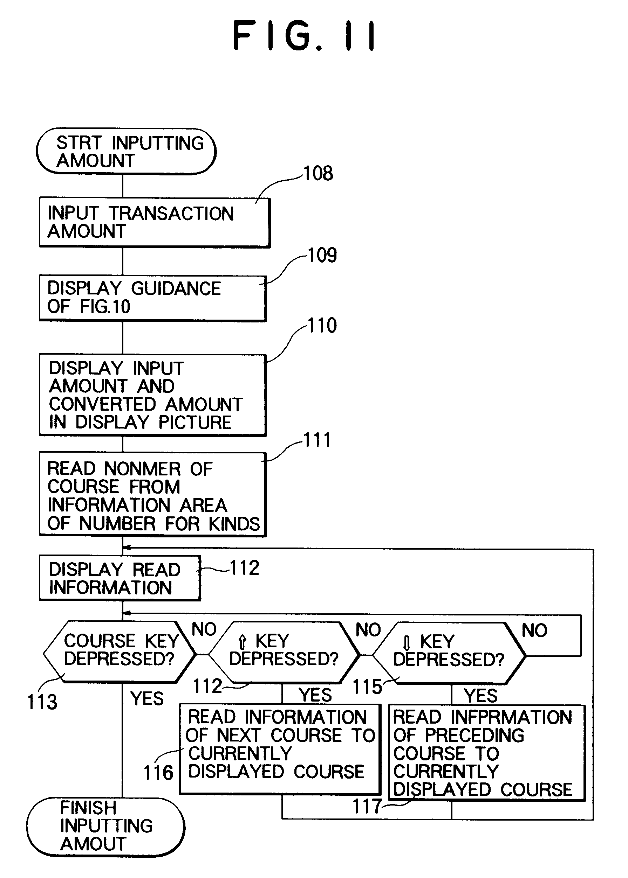

Figs. 10 and 11 show another embodiment of the present invention.

Fig. 10 shows an example of a guidance display system for selecting a combination of kinds of currency to be dispensed by a course. The guidance display system includes an input amount display area 101, a converted amount display area 102, kind-of-currency display areas 103, course selection keys 104, number display areas 105, a next course display key 106, and a preceding course display key 107. Fig. 11 is a flow chart showing a process of this embodiment.

When an amount of currency to be dispensed is designated in the picture of Fig. 3C, the course selection picture of Fig. 10 is displayed (step 109) and an input amount and a converted amount at the conversion rate are displayed in the input amount display area 101 and the converted amount display area 102, respectively (step 110). Kinds of the converted currency are displayed in the kind-of-currency display area 103 and the respective numbers of the kinds are read from information defining a combination pattern of the kinds corresponding to the amount determined previously by means of the higher-rank station or the clerk in charge (step 111) to display the numbers in the number display areas 105 (step 112). The user views the combination for each of the courses and when there is no desired course, the next course display key 106 is depressed (step 114). When a course before the currently displayed course is desired to be viewed, the preceding course display key 107 is depressed (step 115) to thereby select a desired course. When the next course display key 106 is depressed, information of a next course to the currently displayed course is read (step 116) and is displayed in the number display area 105 (step 112). When the preceding course display key 107 is depressed, information of the preceding course to the currently displayed course is read (step 117) and displayed in the number display area 105 (step 112). When a desired course is displayed, the course selection key 104 is depressed (step 113) to determine a combination of the kinds of currency to be dispensed and finish the amount input process.

Registration, modification and deletion of the table relative to an amount of currency to be dispensed and a combination of kinds of currency and the respective numbers of the kinds are now described. These operations are made by a banker.

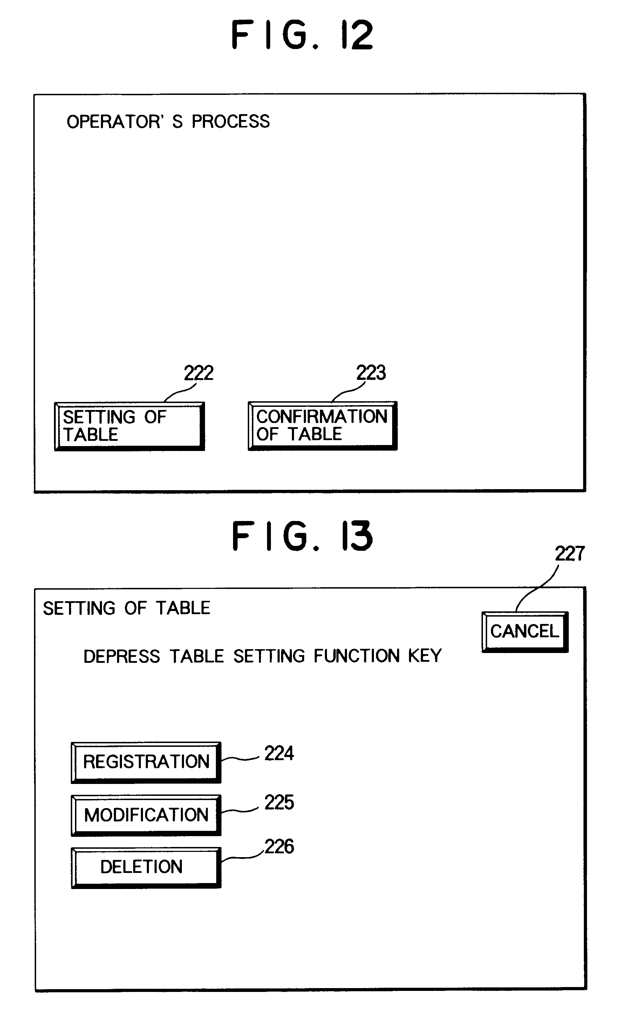

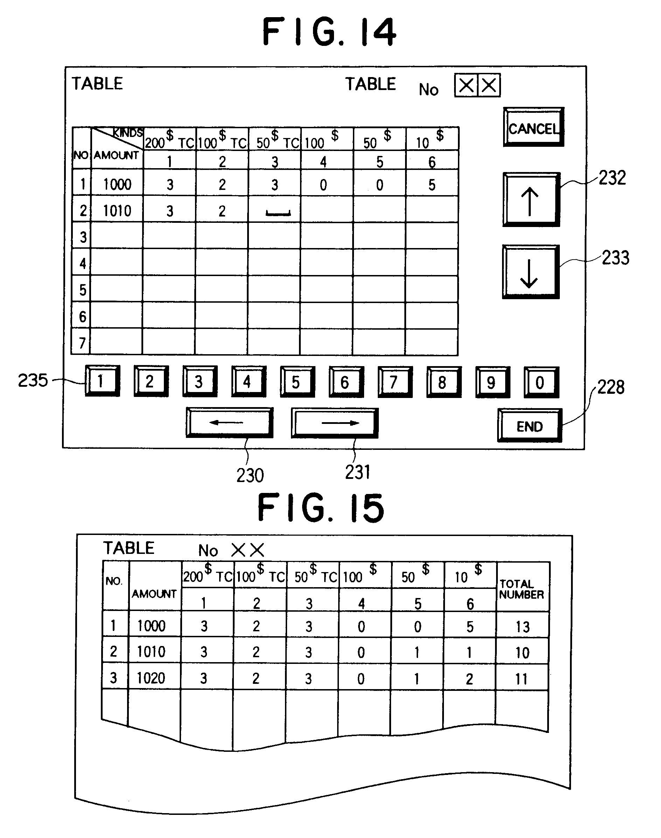

When the banker performs a predetermined operation, for example, when the banker inserts a dedicated magnetic card, an operation guidance picture shown in Fig. 12 is displayed in the input/display unit 7. When a table set key 222 on the picture shown in Fig. 12 is operated, a picture for the registration, modification and deletion shown in Fig. 13 appears. On the other hand, when a table confirmation key 223 is operated, a picture for guiding an input of the table number is then displayed (not shown) and the table having the inputted number is printed as shown in Fig. 15. Fig. 14 illustrates a picture displayed subsequently when a registration key 224 or a modification key 225 shown in Fig. 13 is operated. Fig. 14 shows an example for preparing a new table. In Fig. 14, cursor movement keys 230 to 233 and numerical keys 235 are used to fill blanks in the table. All blanks in the table are filled by numerical values and when a table number is set and an end key 228 is operated, the new table is registered.

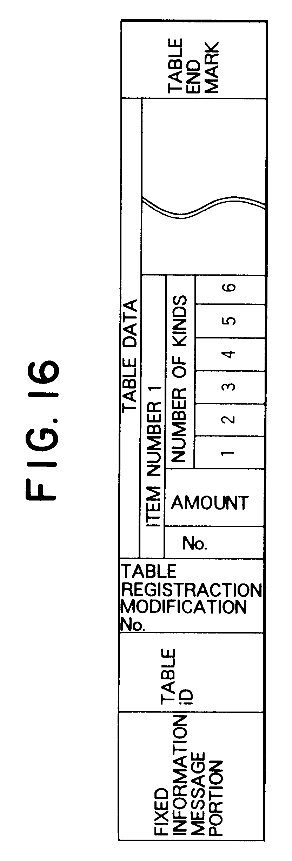

Fig. 16 shows an example of a message format sent from the higher-rank station to the exchanging apparatus of the embodiment. A table is newly registered and modified by the message format. When the CPU of the controller 20 recognizes a table iD of the message format, the CPU processes table information extending to a table end mark. A table number is registered or modified by a table registration modification number. Contents of the table are set from table data.

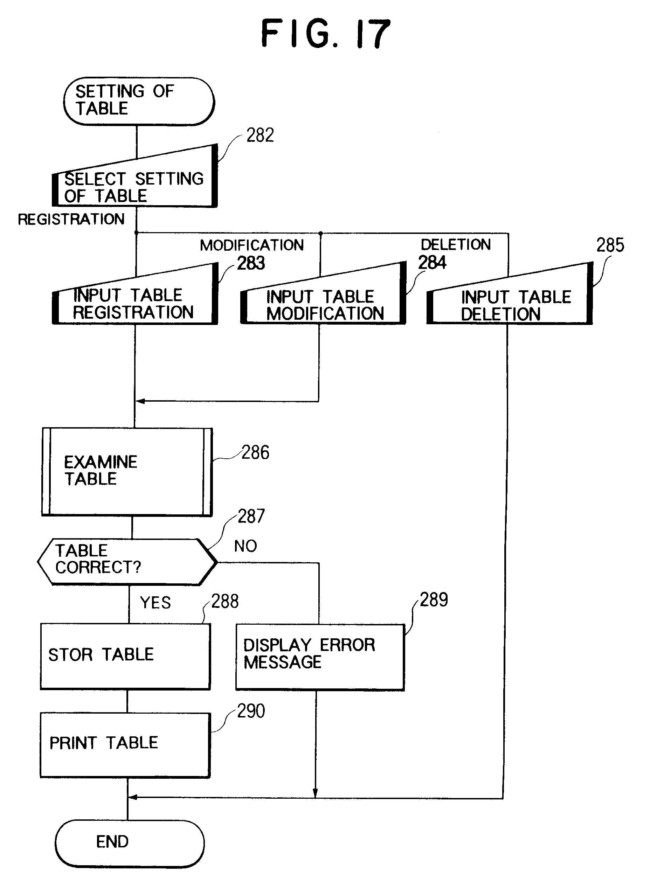

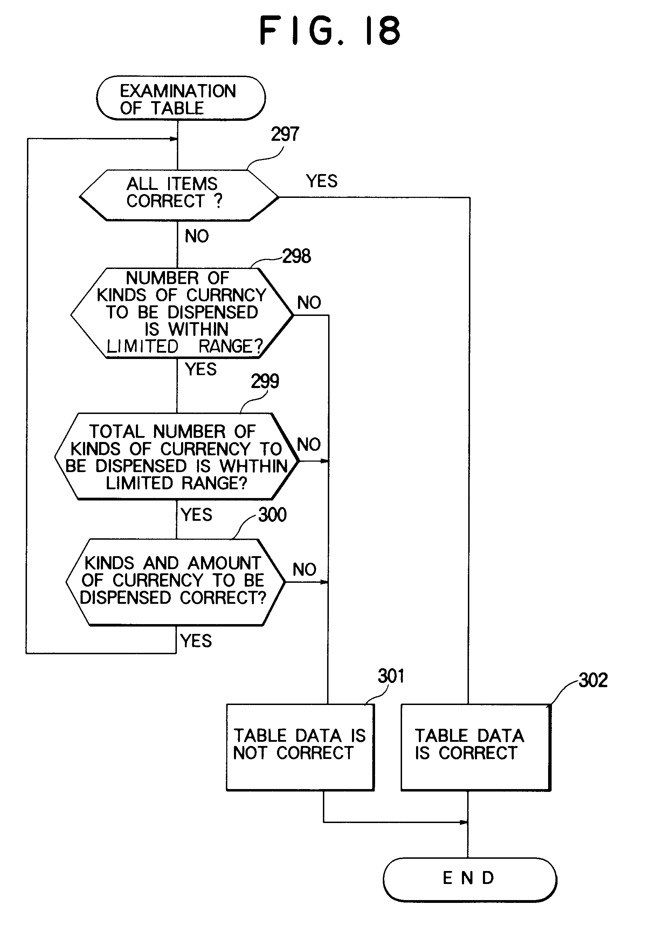

Fig. 17 is a flow chart showing a process for registration, modification and deletion of the table. Step 282 is performed by selecting one of the three keys 224, 225 and 226 shown in the picture of Fig. 13. In step 283, the operation described in the example of Fig. 14 is made. In step 284, a number of a table to be modified is read and the table is displayed as in Fig. 14. Any numerical value in the table is modified by using the cursor movement keys 130 to 133 and the numerical keys 235 and after confirmation of the modification the end key 228 is operated. In step 285, a number of a table to be deleted is read to display the table as in Fig. 14 and the end key 228 is operated. In steps 286 and 287, the newly registered or modified table is examined on the basis of the process of Fig. 18 described later. As a result of the examination, if the contents of the table are correct, the contents of the table are stored in the memory 38 or an external storage medium (step 288) and are printed as in Fig. 15 (step 290). On the other hand, if the contents of the table are not correct, an error message is displayed in the input/display unit 7.

Fig. 18 shows a process for examining the contents of the table. In step 298, whether the number of each of the kinds of currency to be dispensed is within an allowable range of the exchanging apparatus of the embodiment or not is judged, that is, whether the total amount of currency can be dispensed at a time or not is judged. In step 299, whether the total number of the kinds of currency to be dispensed is within an allowable range of the exchanging apparatus or not is judged. In step 300, whether the total amount of currency to be dispensed is correct or not is judged, that is, whether the amount at the left end column of the table is equal to the total amount in the combination of the kinds of currency and the respective numbers of the kinds or not is judged. When all of judgments in steps 298, 299 and 300 are YES (step 297), it is judged that the contents of the table are correct. When at least one of the judgments is NO, it is judged that the contents of the table are not correct.

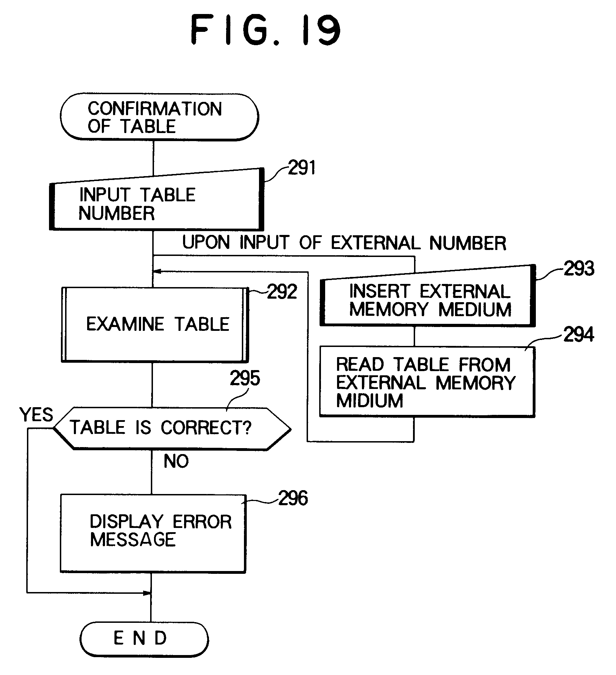

Fig. 19 is a flow chart showing a process in the case where the confirmation key 223 in the operation guidance picture of Fig. 12 is operated. In step 291, the number of a table to be confirmed is inputted. When the table having the inputted number is stored in the memory 38, the table is read out therefrom and is subjected to the examination shown in Fig. 18 in step 292. When the table is stored in the external storage medium, a guidance is displayed to insert the medium into the disk driver 35, so that the table having the inputted number is read out from the medium (steps 293 and 294) and the table is subjected to the process of step 292. When the contents of the table are correct, the process is finished (step 295). Further, the contents of the table are printed in the form of Fig. 15 if necessary. When the contents of the table are not correct, an error message is displayed (step 296).

The present invention has been described in detail, while it should be understood that various changes, substitutions and alterations can be made hereto without departing from the spirit and scope of the present invention as defined by the appended claims.

## Claims

1. Automatic exchanging apparatus for exchanging first currency into second currency, comprising:
first storage means (38) for storing a first relation of an amount of said second currency to be dispensed from said apparatus and a combination of predetermined kinds of said second currency and the respective numbers of the kinds previously determined in accordance with the amount of said second currency;
second storage means (38) for storing a conversion rate between said first currency and said second currency and a handling fee for the kind requiring the handling fee;
means (20) for reading a combination of the kinds and the respective numbers of the kinds corresponding to a designated amount of said second currency from said first storage means;
first operation means (20) for calculating an amount of said first currency required to purchase the kinds of currency in the read combination in accordance with storage contents of said second storage means;
display (7, 25) for displaying said designated amount of second currency, said read combination of the kinds and the respective numbers of the kinds, and said calculated amount of first currency; and
means (13, 15, 27, 29) for dispensing the kinds of currency in said read combination.

2. An automatic exchanging apparatus according to Claim 1, further comprising:
amount-to-be-dispensed designating means (7, 25) for designating an amount of said second currency to be dispensed;
said amount-to-be-dispensed designating means includes:
first designating means capable of causing a user to designate the amount of said second currency directly;
second designating means including means capable of causing the user to input the amount of said first currency and second operation means for calculating an amount of said second currency corresponding to the inputted amount of said first currency on the basis of contents stored in said second storage means; and
means capable of causing the user to select one of said first and second designating means.

3. An automatic exchanging apparatus according to Claim 2, further comprising:
means (63, 70) for changing the combination of the kinds and the respective numbers.

4. An automatic exchanging apparatus according to Claim 3, wherein when an amount of said second currency is directly designated through said first designating means, said changing means controls so that the total amount of the changed combination is equal to or less than the designated amount of said second currency, and when an amount of said first currency is inputted through said second designating means, said changing means controls so that an amount of said first currency required to purchase kinds of currency in the changed combination is equal to or less than said inputted amount of said first currency.

5. An automatic exchanging apparatus according to Claim 3, wherein said amount-to-be-dispensed designating means and said changing means are disposed to be overlapped on said display in a touch panel manner; and an amount of said first or second currency is displayed in said display when said amount is inputted by said amount-to-be-dispensed designating means; a changed combination, a total amount of kinds of currency in the changed combination and an amount of said first currency corresponding to said total amount being displayed in said display simultaneously when said changing means is operated.

6. An automatic exchanging apparatus according to Claim 4, wherein said kinds of currency comprise cash and traveller's check.

7. An automatic exchanging apparatus according to Claim 1, wherein said first relation comprises a table format.

8. An automatic exchanging apparatus according to Claim 4, further comprising:
means for correcting or newly setting said first relation of the amount of said second currency and the combination of predetermined kinds of said second currency and the respective numbers of the kinds previously determined in accordance with said amount of said second currency and stored in said first storage means.

9. An automatic exchanging apparatus according to Claim 4, wherein said first storage means comprises external memory means.

10. An automatic exchanging apparatus according to Claim 4, wherein
said first relation of the amount of said second currency and the combination of predetermined kinds of said second currency and the respective numbers of the kinds previously determined in accordance with said amount of said second currency and stored in said first storage means is corrected or newly set in accordance with instructions of a higher-rank station connected to said automatic exchanging apparatus on-line.

11. An automatic exchanging apparatus according to Claim 4, further comprising means for printing the first relation stored in said first storage means.

12. An automatic exchanging apparatus according to Claim 6, further comprising:
an input/output port (11) for only a card;
means (21) for reading information written in said card,
means (20, 33) for sending the information to a high-rank station (39) so that a resistered secret code is defined;
means (20) for comparing a secret code inputted by the user with said resistered secret code to allow an automatic exchanging operation when both of the codes are coincident.

13. An automatic exchanging apparatus according to Claim 6, further comprising:
means (30) for reading a number of said traveller's check dispensed;
means (11) for issuing a detailed slip for exchange; and
means (23) for writing said read number of said traveller's check on said detailed slip.

14. An automatic exchanging apparatus according to Claim 4, further comprising:
third storage means for storing a second relation of an amount of said second currency and a combination of predetermined kinds of said second currency and the respective numbers of the kinds previously determined in accordance with said amount of said second currency; and
means for causing the user to select one of said first relation stored in said first storage means and said second relation stored in said third storage means;
wherein said reading means reads out a combination of said kinds of currency and the respective numbers of the kinds corresponding to said designated amount of second currency in accordance with said selected relation.

15. An apparatus for exchanging a designated amount into predetermined kinds of currency, comprising:
first storage means (38) for storing a relation of an amount and a combination of said predetermined kinds of currency and the respective numbers of the kinds corresponding to said amount;
means (20) for reading out a combination of said predetermined kinds of currency and the respective numbers of the kinds corresponding to a designated amount from said first storage means;
display (7, 25) for displaying said designated amount and said read combination of the kinds of currency and the respective numbers of the kind; and
means (13, 15, 27, 29) for dispensing the kinds of currency in said read combination.

16. An automatic exchanging apparatus for exchanging first currency into second currency, comprising:
first designating means for designating an amount of currency to be exchanged by an amount of said first currency;
second designating means for designating an amount of currency to be exchanged by an amount of said second currency;
means for selecting one of said first and second designating means; and
means for dispensing second currency exchanged.

17. A method of exchanging first currency into second currency, comprising the steps of:
previously storing a first relation of an amount of second currency and a combination of predetermined kinds of second currency and the respective numbers of the kinds previously determined in accordance with said amount;
previously storing a conversion rate between said first currency and said second currency and a handling fee for a kind requiring the handling fee;
reading a combination of the kinds and the respective numbers of the kinds corresponding to a designated amount of second currency from said first relation;
calculating an amount of said first currency required to purchase the kinds in said read combination in accordance with said conversion rate and handing fee;
displaying said designated amount of second currency, said read combination of the kinds and the respective numbers of the kinds, and said calculated amount of first currency; and
dispensing the kinds of currency in said read combination.

18. An automatic exchanging apparatus according to Claim 3, wherein a total amount of the second currency to be dispensed and an amount of the first currency required to purchase kinds of currency in changed combination being both changed when the combination being changed by changing means.
